# EUROPEAN PATENT APPLICATION

(11) **EP 2 428 826 A1**
(43) Date of publication of application: **14.03.2012**
(21) Application number: 11180685.7
(22) Date of filing: 09.09.2011
(51) Int. Cl.: G02B 6/00, F21V 8/00

(54) **Light source apparatus and method of using light source appartus**

(30) Priority: 10.09.2010 TW 099130690
(71) Applicant: Young Lighting Technology Corporation, Hsin-Chu 300 (TW)
(72) Inventor: Chang, Wen-Chiao, 300 Hsinchu (TW); Ye, Fang-Ru, 300 Hsinchu (TW); Custodis, Udo, Hsinchu 300 (TW)
(74) Representative: TER MEER - STEINMEISTER & PARTNER GbR

(57) **Abstract**

A light source apparatus includes a light guide plate, at least one light emitting device, and a reflecting unit. The light guide plate has a first surface, a second surface opposite to the first surface, and a light incident surface connecting the first surface and the second surface. The first surface and the second surface connect to form a tip opposite to the light incident surface. An included angle formed between the first surface and the second surface at the tip is greater than 0 degree and less than or equal to 20 degrees. The light emitting device is disposed beside the light incident surface. The reflecting unit is disposed on the second surface. A method of using a light source apparatus is also provided.

## Description

### CROSS-REFERENCE TO RELATED APPLICATION

This application claims the priority benefit of Taiwan application serial no. 99130690, filed on September 10, 2010. The entirety of the above-mentioned patent application is hereby incorporated by reference herein and made a part of this specification.

### BACKGROUND OF THE INVENTION

### Field of the Invention

The invention generally relates to a light source apparatus and a method of using a light source apparatus.

### Description of Related Art

Recently, techniques to manufacture a light emitting diode (LED), a next generational light source developed to replace traditional incandescent blubs and fluorescent tubes, have gradually matured along with the advancements in optoelectronic technologies. Since the LED has advantages such as low power consumption, light weight, non-heat conductive light emission, while being environmentally friendly, the LED has been widely applied in various fields.

Since the LED has a small volume, the exterior of a lamp employing LEDs may be varied and is not limited by the shapes of traditional lamps. In particular, the planar LED illuminator, due to its thin thickness, has gained a wide acceptance among users.

The beam shape of an exiting light beam of a conventional planar illuminator is typically symmetrical. However, this type of beam shape is not suitable for illumination of a specific region. A reason is that under this type of beam shape, only a portion of light is transmitted to the specific region, whereas a large portion of light is projected towards other regions, thereby producing a large amount of ineffective light and wasting energy. Moreover, even by reducing the distance to the planar illuminator so that the specific region receives sufficient illumination, glare is produced because the ineffective light is easily transmitted directly to the user's eyes, making for eye discomfort.

In addition, when the planar illuminator is applied in desk lamps, the planar illuminator is disposed directly above the desk, taking up valuable space on the desk and restricting flexibility.

U.S. Patent Publication No. 2010/0165661 discloses an illumination device adopting a light guide plate to guide light rays.

### SUMMARY OF THE INVENTION

Accordingly, the invention provides a light source apparatus capable of achieving an oblique emission effect.

The invention provides a method of using a light source apparatus capable of achieving the effects of saving energy, conserving space, and sufficient illumination.

Other objects and advantages of the invention can be further illustrated by the technical features broadly embodied and described as follows.

To achieve one, a part, or all of the objectives aforementioned or other objectives, one embodiment of the invention provides a light source apparatus including a light guide plate, at least a light emitting device, and a reflecting unit. The light guide plate has a first surface, a second surface opposite to the first surface, and a light incident surface connecting the first surface and the second surface. The first surface and the second surface connect to form a tip opposite to the light incident surface, and an included angle formed between the first surface and the second surface at the tip is greater than 0 degree and less than or equal to 20 degrees. The light emitting device is disposed beside the light incident surface, and the reflecting unit is disposed on the second surface.

Another embodiment of the invention provides a method of using a light source apparatus, including the following steps. A light source apparatus is provided, in which the light source apparatus has a light exiting surface, and the light source apparatus is capable of providing a light beam obliquely emitted through the light exiting surface. The light source apparatus is disposed on a first surface wherein the light exiting surface is substantially parallel to the first surface and the light beam obliquely illuminates a second surface, in which the second surface is not parallel to the first surface.

In view of the foregoing, embodiments of the invention include at least one of the following advantages or effects. In the light source apparatus according to an embodiment of the invention, the first surface and the second surface of the light guide plate connect to form the tip away from the light incident surface. Accordingly, the light beam can be effectively emitted from the first surface toward the tip obliquely, thereby effectively lowering a possible light leakage of the light beam from the light guide plate at an end away from the light incident surface. Therefore, the light source apparatus according to an embodiment of the invention can maintain a high luminescence efficiency while providing oblique illumination. Moreover, the luminous flux of the light beam emitted from the first surface is also enhanced. In addition, since the light beam emitted by the light source apparatus is concentrated, the light beam may be used to focus illumination on a specific region, thereby reducing the generation of ineffective light and accordingly enhancing efficiency and saving energy. Further, since the method of using the light source apparatus according to an embodiment of the invention can focus the light beam to be emitted obliquely to the illuminated object, therefore the generation of ineffective light is effectively prevented and energy is saved. Alternatively, from another perspective, the method of using the light source apparatus according to an embodiment of the invention requires fewer light emitting devices to sufficiently illuminate the illuminated object, thereby effectively lowering the cost of the light source apparatus. Moreover, in adopting the method of using the light source apparatus according to an embodiment of the invention, the light beam is concentrated to be obliquely emitted to the illuminated object, such that a glare phenomenon is not produced for the user's eyes located besides the illuminated object while directly viewing the light source apparatus. Therefore, when the method of using the light source apparatus is adopted, the user's eyes are kept in a comfortable condition.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1A is a schematic cross-sectional view of a light source apparatus according to an embodiment of the invention.

FIG. 1B is a perspective view of the light source apparatus depicted in FIG. 1A.

FIG. 2 is a light distribution diagram of the light source apparatus depicted in FIG. 1A.

FIG. 3 is a schematic view of a method of using a light source apparatus according to an embodiment of the invention.

FIG. 4A and 4B are schematic views of a method of using a light source apparatus according to another embodiment of the invention.

FIG. 5 is a schematic view of a method of using a light source apparatus according to another embodiment of the invention.

FIG. 6 is a schematic view of a method of using a light source apparatus according to another embodiment of the invention.

Fig. 7 illustrates a schematic cross-sectional view of a light source apparatus according to another embodiment of the invention.

### DESCRIPTION OF EMBODIMENTS

In the following detailed description of the preferred embodiments, reference is made to the accompanying drawings, which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

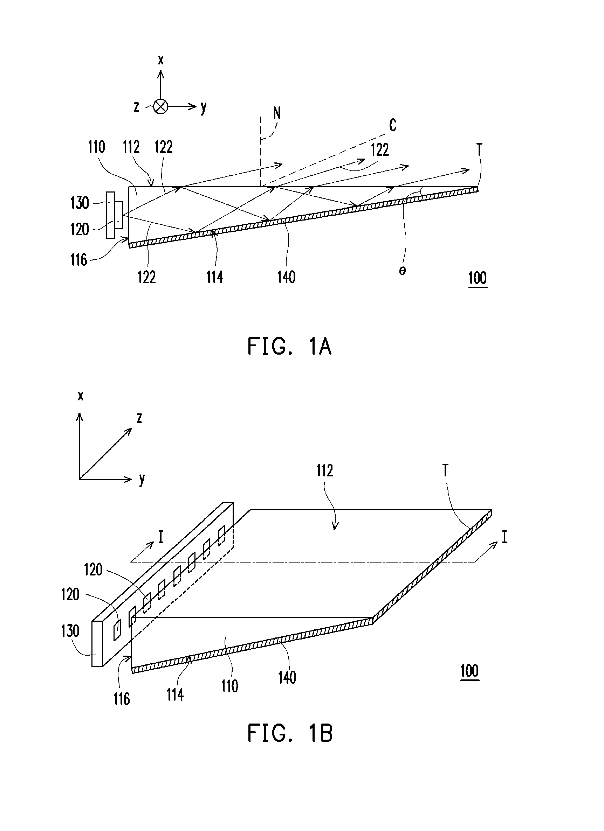

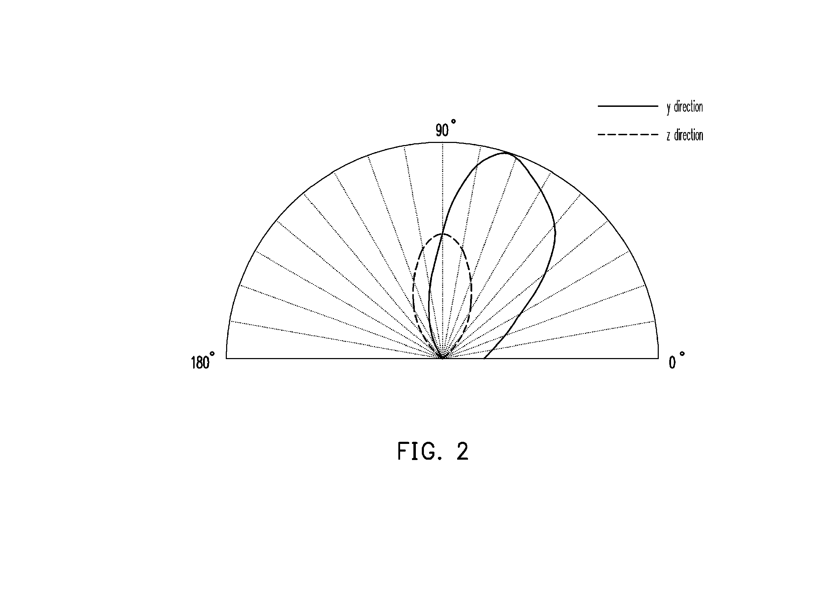

FIG. 1A is a schematic cross-sectional view of a light source apparatus according to an embodiment of the invention. FIG. 1B is a perspective view of the light source apparatus depicted in FIG. 1A. Moreover, FIG. 1A is a schematic cross-sectional view of a light source apparatus depicted in FIG. 1B along a line I-I. Referring to FIGs. 1 and 2, a light source apparatus 100 of the embodiment includes a light guide plate 110, at least a light emitting device 120 (e.g., a plurality of light emitting devices 120 depicted in FIG. 1B), and a reflecting unit 140. The light guide plate 110 has a first surface 112, a second surface 114 opposite to the first surface 112, and a light incident surface 116 connecting the first surface 112 and the second surface 114. The first surface 112 and the second surface 114 connect to form a tip T opposite to the light incident surface 116, and an included angle θ formed between the first surface 112 and the second surface 114 at the tip T is greater than 0 degree and less than or equal to 20 degrees. The light emitting devices 120 are disposed beside the light incident surface 116, and the reflecting unit 140 is disposed on the second surface 114.

In the embodiment, the light emitting devices 120 are light emitting diodes (LEDs), for example. Moreover, the light emitting devices 120 may be disposed on a substrate 130, in which the substrate 130 is a circuit board, for example. However, in other embodiments, the light emitting devices 120 may be cold cathode fluorescent lamps or other suitable light emitting devices. In the embodiment, the reflecting unit 140 is a reflective sheet, for example. However, in other embodiments, the reflecting unit 140 may also be a reflective film. Further, in the embodiment, the second surface 114 is a plane surface, for example, although the invention is not limited thereto. In addition, the reflecting unit 140 is a white reflective sheet, a silver reflective sheet, a silver-coated film, or an aluminum-coated film. Alternatively, the reflecting unit 140 may also be other reflective sheets or reflective films with over 90% reflectivity.

In the embodiment, the light emitting devices 120 are capable of emitting a light beam 122. Moreover, the light beam 122 is capable of entering into the light guide plate 110 through the light incident surface 116, and is capable of being emitted from the light guide plate 110 through the first surface 112. Specifically, a portion of the light beam 122 obliquely emitted to the first surface 112 through the light incident surface 116 is capable of being refracted by the first surface 112 and emitted out of the light guide plate 110, and another portion of the light beam 122 is reflected by the first surface 112 to the second surface 114. The light beam 122 from the light incident surface 116 and the first surface 112 and emitted to the second surface 114 is capable of being reflected by the reflecting unit 140 to the first surface 112, and thereafter a portion of the light beam 122 is capable of being refracted by the first surface 112 and obliquely emitted out of the light guide plate 110, and another portion of the light beam 122 is reflected by the first surface 112 back toward the second surface 114. After the afore-described optical effect from the light guide plate 110, the light beam 122 may be obliquely emitted out of the light guide plate 110 from the first surface 112. In other words, relative to a normal N of the first surface 112, a center axis C having the highest light intensity of the light beam 122 emitted from the first surface 112 tilts in a direction away from the light incident surface 116.

FIG. 2 is a light distribution diagram of the light source apparatus 100 depicted in FIG. 1A. Please refer to FIGs. 1A, 1B, and 2. In FIG. 2, the radial direction represents the light intensity of the light beam 122 emitted from the first surface 112, and the circumferential direction represents an exit angle of the light beam 122 relative to the first surface 112. The solid lines in FIG. 2 represent the light distribution on the plane parallel to the x-y plane and passing through the center of the light guide plate 110, in which 0 degree represents the +y direction, 90 degrees represent the +x direction, and 180 degrees represent the -y direction. Moreover, the dotted lines in FIG. 2 represent the light distribution on the plane parallel to the z-x plane and passing through the center of the light guide plate 110, in which 0 degree represents the +z direction, 90 degrees represent the +x direction, and 180 degrees represent the ―z direction. The x, y, and z directions illustrated in FIGs. 1A and 1B are perpendicular to each other. In the embodiment, the light incident surface 116 is substantially parallel to the x-z plane, and the first surface 112 is substantially parallel to the y-z plane. As shown in FIG. 2, the light source apparatus 100 of the embodiment may achieve oblique emission of the light beam 122 while the beam shape is horizontally asymmetrical on the x-y plane.

In order for the light source apparatus 100 of the embodiment to achieve a preferred oblique emission effect, in the embodiment for the light beam 122 emitted from the first surface 112, a full width at half maximum (FWHM) of the light intensity on a plane (e.g., a plane parallel to the x-y plane) substantially perpendicular to the first surface 112 and the light incident surface 116 is less than or equal to 90 degrees. The FWHM of the light intensity herein is defined as the angular range within which the light intensities of the light beam 122 at different angles are all greater than or equal to half of the highest light intensity of the light beam 122. For example, in an embodiment, the direction of the light beam 122 having the highest light intensity is on the x-y plane corresponding to the 45 degrees direction depicted in FIG. 2. At this time, the FWHM smaller than 90 degrees represents the angular range of the light beam 122 is approximately greater than 0 degree and smaller than or equal to 90 degrees, where the angular range is the range which the light intensity in the light beam 122 is greater or equal to half of the light intensity on the 45 degrees direction. In one embodiment, in order for the light source apparatus 100 to achieve the preferable oblique emission effect, the included angle θ of the first surface 112 and the second surface 114 may be configured as greater than 0 degree and smaller or equal to 15 degrees, or even configured as greater than 0 degree and smaller or equal to 12 degrees.

In the embodiment, the first surface 112 and the second surface 114 of the light guide plate 110 connect to form the tip T away from the light incident surface 116. Accordingly, the light beam 122 may be effectively emitted from of the first surface 112 toward the tip T obliquely, thereby effectively lowering a possible light leakage of the light beam 122 from the light guide plate 110 at an end away from the light incident surface 116. Therefore, the light source apparatus 100 of the embodiment may maintain high luminescence efficiency while providing oblique illumination. Moreover, the luminous flux of the light beam 122 emitted from the first surface 112 is also enhanced. In addition, since the tip T is formed at an end of the light guide plate 110 away from the light incident surface 116, therefore the end of the light guide plate 110 away from the light incident surface 116 does not substantially reflect light back to an end of the light incident surface 116 and cause a disturbance to the effect of the horizontally asymmetrical beam shape. In other words, the light source apparatus 100 of the embodiment may produce asymmetric illumination with directionality. Moreover, since the light beam 122 emitted by the light source apparatus 100 is concentrated, the light beam 122 may be used to focus illumination on a specific region, thereby reducing the generation of ineffective light and accordingly enhancing efficiency and saving energy. Further, in the embodiment, since the light guide plate 110 is integrally formed, the fabrication of the light guide plate 110 is simple, thereby reducing a manufacturing cost.

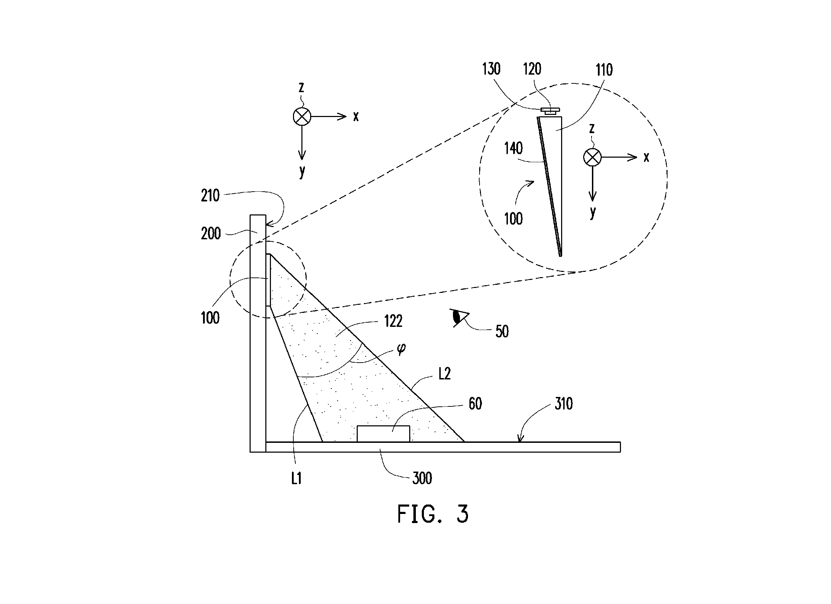

FIG. 3 is a schematic view of a method of using a light source apparatus according to an embodiment of the invention. Referring to FIGs. 1A, 1B, and 3, the method of using the light source apparatus may be applied in the light source apparatus 100 of FIG. 1A. The method of using the light source apparatus of the embodiment includes the following steps. First, the afore-described light source apparatus 100 is provided. The light source apparatus 100 has a light exiting surface (e.g., the first surface 112 of the light guide plate 110), and is capable of providing a light beam 122. The light beam 122 is obliquely emitted from the light exiting surface (e.g., the first surface 112 of the light guide plate 110). Thereafter, the light source apparatus 100 is disposed on a first surface 210, such that the light exiting surface (e.g., the first surface 112 of the light guide plate 110) is substantially parallel to the first surface 210, and the light beam 122 obliquely illuminates a second surface 310, in which the second surface 310 is not parallel to the first surface 210. In the embodiment, the first surface 210 is, for example, a surface of an object 200, and the second surface 310 is, for example, a surface 310 of another object 300. For example, the object 200 is a wall, and the first surface 210 is a wall surface. Moreover, the object 300 is a floor, for example, and the surface 310 is a ground surface. However, the first surface 210 may also be a surface of other objects, for example a ceiling, a furniture surface, or other object surfaces, which the light source apparatus 100 may be fixed thereon. Moreover, the second surface 310 may also be a surface of other objects, for example a desk, another furniture surface, a wall surface, other object surfaces to be illuminated, or other object surfaces, which the illuminated object may be disposed thereon. In the embodiment, the first surface 210 is substantially perpendicular to the second surface 310, although the invention is not limited thereto.

In the embodiment, the light source apparatus 100 is a planar lamp, for example, and the method to dispose the light source apparatus 100 on the first surface 210 includes flatly adhering the light source apparatus 100 on the first surface 210. Accordingly, the light source apparatus 100 does not occupy the space above an illuminated object 60 disposed on the first surface 210, and thus visually, the user feels the environment is more spacious. In other embodiments, the light source apparatus 100 may be embedded in the first surface 210. For example, the light source apparatus 100 may be embedded in a wall surface, and the first surface 112 of the light guide plate 110 may be configured to be substantially on the same plane as the wall surface, so as to achieve the effect of saving space and beautifying the environment.

Moreover, since the light source apparatus 100 obliquely emits the light beam 122 from the wall surface (e.g., the first surface 210) to the ground surface (e.g., the second surface 310), the effect of sunlight obliquely spilling into a room from outside a window may be simulated. In other words, the light source apparatus 100 may simulate a natural light source, thereby achieving the effect of beautifying the interior environment. In the embodiment, the light intensity of the light rays L1 and L2 in the light beam 122 is half of the highest light intensity of the light beam 122. Therefore, the angular range ϕ is the FWHM of the light beam 122. In the embodiment, the angular range ϕ is greater than 0 degree and smaller or equal to 90 degrees. Accordingly, the light beam 122 may be concentratedly emitted to the illuminated object 60, thereby reducing the production of ineffective light and further saving energy. Alternatively, from another perspective, fewer light emitting devices 120 may be used to sufficiently illuminate the illuminated object 60, thereby effectively lowering the cost of the light source apparatus 100. Moreover, since the light beam 122 is concentrated to be obliquely emitted to the illuminated object 60, when directly viewing the light source apparatus 100, a glare phenomenon is not produced for an eye 50 of the user located besides the illuminated object 60. Therefore, when the method of using the light source apparatus 100 according to the embodiment is adopted, the user's eye 50 is kept in a comfortable condition.

In the embodiment, the first surface 210 is substantially parallel to the y-z plane, and the second surface 310 is substantially parallel to the x-z plane. Moreover, the directions of the x, y, and z directions are identically defined as the directions depicted in FIGs. 1A and 1B, therefore further description thereof is omitted hereafter.

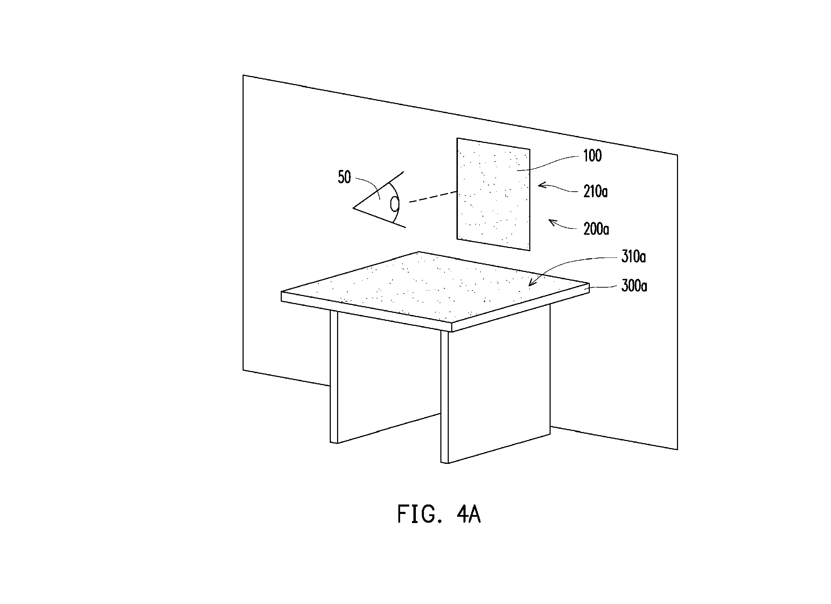

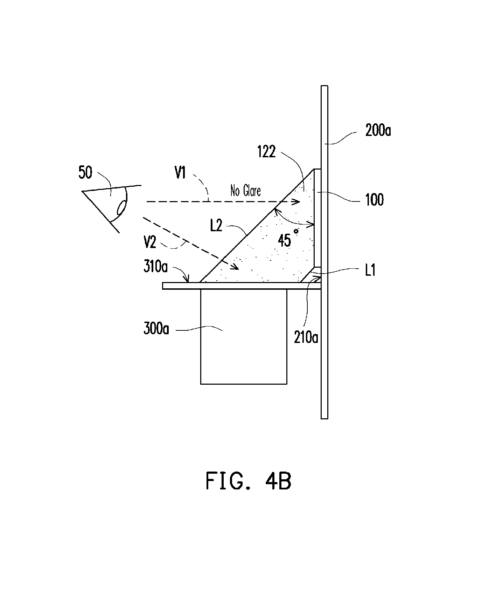

FIGs. 4A and 4B are schematic views of a method of using a light source apparatus according to another embodiment of the invention, in which FIG. 4A is a three dimensional view and FIG. 4B is a side view. Referring to FIGs. 4A and 4B, the method of using the light source apparatus according to the embodiment is similar to the embodiment illustrated in FIG. 3. A difference therebetween is that in the embodiment, an object 300a is a desk, and a second surface 310a is a desk surface. Moreover, an object 200a is a wall, and a first surface 210a is a wall surface besides the desk, and the light source apparatus 100 is disposed on the first surface 210a. Since the light beam 122 emitted from the light source apparatus 100 is concentrated to obliquely illuminate the second surface 310a, therefore glare is not produced when the user directly views the light source apparatus 100 on a viewing direction V1**.** In addition, when the user directly views the second surface 310a (e.g., the desk surface) on a viewing direction V2 or directly views objects or books on the desk, a sufficient amount of illumination is provided. Thereby, the light source apparatus 100 may simulate the effect of sunlight spilling onto the desk from outside a window, and therefore the user may experience reading or using obj ects on the desk under a natural lighting environment.

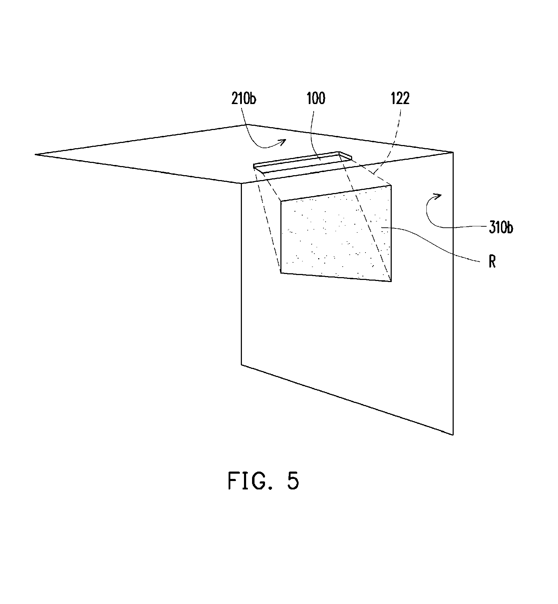

FIG. 5 is a schematic view of a method of using a light source apparatus according to another embodiment of the invention. Referring to FIG. 5, the method of using the light source apparatus according to the embodiment is similar to the embodiment illustrated in FIG. 3. A difference therebetween is that in the embodiment, a first surface 210b is a ceiling, and a second surface 310b is a wall surface. Since the light beam 122 emitted from the light source apparatus 100 is obliquely illuminated on a region R of the wall surface (e.g., the second surface 310b), an effect of wall washing may be produced. In other words, the light source apparatus 100 may be used as a wall wash lamp, thereby achieving the effect of beautifying the environment.

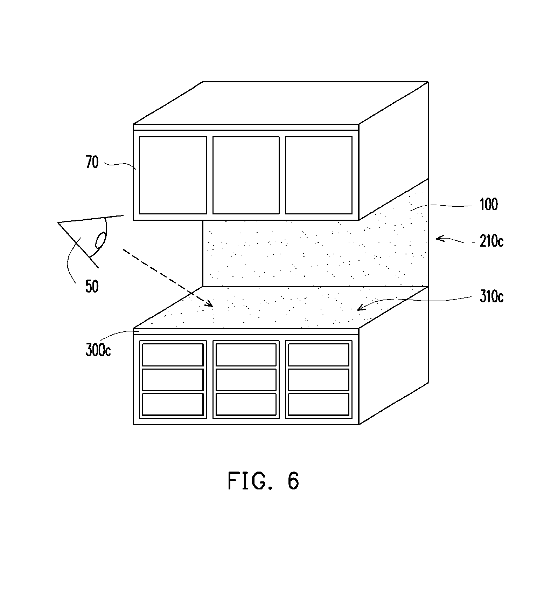

FIG. 6 is a schematic view of a method of using a light source apparatus according to another embodiment of the invention. Referring to FIG. 6, the method of using the light source apparatus according to the embodiment is similar to the embodiment illustrated in FIG. 3. A difference therebetween is that in the embodiment, a first surface 210c is a wall surface in a kitchen between an upper kitchen cabinet 70 and a lower kitchen cabinet 300c. Moreover, a second surface 310c is an upper surface of the lower kitchen cabinet 300c, in other words the countertop surface of the kitchen counter. The light source apparatus 100 flatly adhered to the first surface 210c may obliquely illuminate the countertop surface of the kitchen counter, so as to provide sufficient illumination while not producing glare and discomfort for the user's eyes. In another embodiment, the light source apparatus 100 may also be disposed on a bottom surface of the upper kitchen cabinet 70, so as to obliquely illuminate the wall surface, or obliquely illuminate the wall surface and a portion of the countertop surface of the kitchen counter.

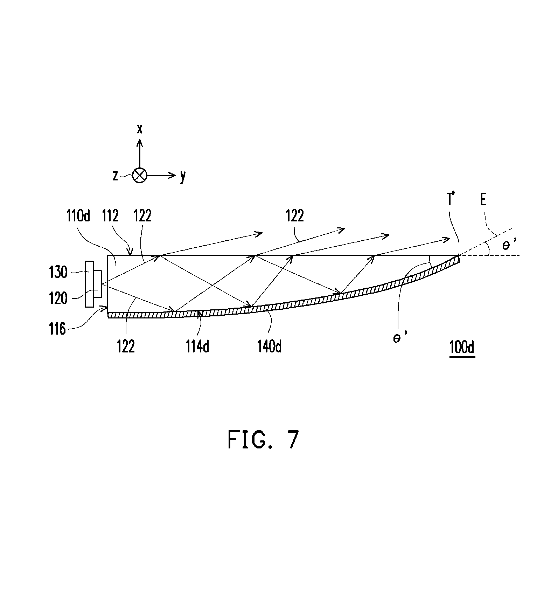

Fig. 7 illustrates a schematic cross-sectional view of a light source apparatus according to another embodiment of the invention. Referring to FIG. 7, a light source apparatus 100d of the embodiment is similar to the light source apparatus 100 depicted in FIG. 1A, and a difference therebetween is described as below. In the embodiment, a second surface 114d of a light guide plate 110d is a curved convex surface, for example a curved convex surface curving on a x-y plane but not curving on the z direction. Moreover, a reflecting unit 140d curves along the curvature of the second surface 114d. Further, in the embodiment, an included angle θ' of a tip T' formed by connecting the first surface 112 and the second surface 114d is greater than 0 degree and smaller or equal to 20 degrees. The included angle θ' is, for example, equal to an included angle depicted in FIG. 7 formed between an extended surface along the +y direction and a tangent plane E of the position on the second surface 114d near the tip T'. The light source apparatus 100d of the embodiment may achieve advantages and effects similar to the light source apparatus 100 depicted in FIG. 1A, and therefore further description thereof is not repeated hereafter.

Moreover, the methods of using the light source apparatus illustrated in the embodiments of FIGs. 3-6 may be applied in the light source apparatus 100d depicted in FIG. 7 or other light source apparatuses providing oblique illumination. For example, the x, y, and z directions in FIG. 7 correspond to the x, y, and z directions in FIG. 3. In other words, the method of using light source apparatus illustrated in FIG. 3 may be applied in the light source apparatus 100d depicted in FIG. 7.

In view of the foregoing, embodiments of the invention include at least one of the following advantages or effects. In the light source apparatus according to an embodiment of the invention, the first surface and the second surface of the light guide plate connect to form the tip away from the light incident surface. Accordingly, the light beam may be effectively emitted from the first surface toward the tip obliquely, thereby effectively lowering a possible light leakage of the light beam from the light guide plate at an end away from the light incident surface. Therefore, the light source apparatus according to an embodiment of the invention may maintain a high luminescence efficiency while providing oblique illumination. Moreover, the luminous flux of the light beam emitted from the first surface is also enhanced. In addition, since the light beam emitted by the light source apparatus is concentrated, the light beam may be used to focus illumination on a specific region, thereby reducing the generation of ineffective light and accordingly enhancing efficiency and saving energy. Further, since the method of using the light source apparatus according to an embodiment of the invention may focus the light beam to be emitted obliquely to the illuminated object, therefore the generation of ineffective light is effectively prevented and energy is saved. Alternatively, from another perspective, the method of using the light source apparatus according to an embodiment of the invention requires fewer light emitting devices to sufficiently illuminate the illuminated object, thereby effectively lowering the cost of the light source apparatus. Moreover, since the light beam is concentrated and obliquely emitted to the illuminated object, the glare phenomenon is not produced for the user's eyes located besides the illuminated object. Therefore, when the method of using the light source apparatus according to an embodiment is adopted, the user's eyes are kept in a comfortable condition.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A light source apparatus, comprising:
a light guide plate having a first surface, a second surface opposite to the first surface, and a light incident surface connecting the first surface and the second surface, wherein the first surface and the second surface connect to form a tip opposite to the light incident surface, and an included angle formed between the first surface and the second surface at the tip is greater than 0 degree and less than or equal to 20 degrees;
at least a light emitting device disposed beside the light incident surface; and
a reflecting unit disposed on the second surface.

2. The light source apparatus as claimed in claim 1, wherein the light emitting device is capable of emitting a light beam, the light beam is capable of entering into the light guide plate through the light incident surface, and the light beam is capable of being emitted from the light guide plate through the first surface, and relative to a normal of the first surface, a center axis having a highest light intensity of the light beam emitted from the first surface tilts in a direction away from the light incident surface.

3. The light source apparatus as claimed in claim 2, wherein for the light beam emitted from the first surface, a full width at half maximum (FWHM) of a light intensity on a plane substantially perpendicular to the first surface and the light incident surface is less than or equal to 90 degrees.

4. The light source apparatus as claimed in claim 1, wherein the second surface is a planar surface.

5. The light source apparatus as claimed in claim 1, wherein the second surface is a curved convex surface.

6. The light source apparatus as claimed in claim 1, wherein the reflecting unit is a reflective sheet or a reflective film.

7. The light source apparatus as claimed in claim 1, wherein the light emitting device is a light emitting diode (LED).

8. A method of using a light source apparatus, comprising:
providing a light source apparatus, wherein the light source apparatus has a light exiting surface, and the light source apparatus is capable of providing a light beam obliquely emitted out through the light exiting surface; and
disposing the light source apparatus on a first surface wherein the light exiting surface is substantially parallel to the first surface and the light beam obliquely illuminates a second surface, wherein the second surface is not parallel to the first surface.

9. The method as claimed in claim 8, wherein the first surface is substantially perpendicular to the second surface.

10. The method as claimed in claim 8, wherein the first surface is a wall surface, and the second surface is a desk surface.

11. The method as claimed in claim 8, wherein the first surface is a ceiling, and the second surface is a wall surface.

12. The method as claimed in claim 8, wherein a FWHM of a light intensity of the light beam is smaller or equal to 90 degrees.

13. The method as claimed in claim 8, wherein the light source apparatus is a light source apparatus as claimed in any one of claims 1 to 7.

14. The method as claimed in claim 8, wherein the light source apparatus is a planar lamp.

15. The method as claimed in claim 14, wherein disposing the light source apparatus on the first surface comprises flatly adhering the light source apparatus on the first surface, or embedding the light source apparatus in the first surface.
